# EUROPEAN PATENT APPLICATION

(11) **EP 4 804 373 A1**
(43) Date of publication of application: **09.09.2026**
(21) Application number: 23957340.5
(22) Date of filing: 03.11.2023
(51) Int. Cl.: H02J 7/00, H02H 7/18, H01M 50/572, H02H 3/08

(54) **ENERGY STORAGE CIRCUIT AND POWER SUPPLY APPARATUS**

(71) Applicant: Contemporary Amperex Technology Co., Limited, Ningde, Fujian 352100 (CN)
(72) Inventor: CHEN, Xiaobo, Ningde, Fujian 352100 (CN); HU, Lu, Ningde, Fujian 352100 (CN); HAO, Yucang, Ningde, Fujian 352100 (CN)
(74) Representative: Lorenz Seidler Gossel Part. mbB
(86) International application number: PCT/CN2023/129688
(87) International publication number: WO 2025/091484

(57) **Abstract**

An energy storage circuit and a power supply apparatus, belonging to the technical field of power supplies. The energy storage circuit comprises a main positive line, a main negative line, at least one first current limiting component and a battery module connected between the main positive line and the main negative line. The battery module comprises a plurality of battery components which are sequentially connected in series; the plurality of battery components are respectively supported in a one-to-one correspondence by a plurality of support members; the battery components are insulated from the support members; and each first current limiting component is connected between two adjacent support members and is used for limiting the current between the two adjacent support members. Therefore, in case of double-point insulation failures across electrical boxes (support members), the present application reduces short-circuit currents, thus reducing the possibility of causing high-voltage sparking and battery combustion or explosion.

## Description

### TECHNICAL FIELD

The present application relates to the technical field of power supplies, and in particular, to an energy storage circuit and a power supply apparatus.

### BACKGROUND

A related energy storage circuit includes a plurality of battery packs connected in series and/or in parallel. The short-circuit protection methods for the related energy storage circuit include providing a fuse at the positive terminal of the energy storage circuit or the negative terminal of the energy storage circuit, or providing a fuse within each battery pack. The two methods can only reduce the possibility of severe safety hazards, such as battery fire and explosion, in the case of a short circuit at the positive terminal of the energy storage circuit and the negative terminal of the energy storage circuit. However, in the case of a two-point insulation failure across battery enclosures (support members), i.e., when insulation failure occurs in two battery enclosures, the resulting voltage difference is high, and the short-circuit current is extremely high, which is likely to cause severe safety problems such as high-voltage arcing and battery fire and explosion.

Therefore, the related energy storage circuit cannot reduce safety risks in the case of a two-point insulation failure across battery enclosures.

### SUMMARY

In view of the above problem, the present application provides an energy storage circuit and a power supply apparatus, aiming to address the problem that related energy storage circuits cannot reduce safety risks in the case of a two-point insulation failure across battery enclosures.

In a first aspect, the present application provides an energy storage circuit provided in embodiments of the present application. The energy storage circuit includes a main positive line, a main negative line, at least one first current limiting component, and a battery module connected between the main positive line and the main negative line, where the battery module includes a plurality of battery components sequentially connected in series, and the plurality of battery components are respectively supported by a plurality of support members in a one-to-one correspondence.

The battery components are insulated from the support members.

The first current limiting component is connected between two adjacent support members, and the first current limiting component is configured to limit a current between the two adjacent support members.

In the technical solutions of the embodiments of the present application, the battery components are insulated from the support members, and the first current limiting component is connected in series between two adjacent support members. As a result, in the case of a two-point insulation failure across battery enclosures (support members), that is, in the case where insulation failure occurs in each support member, one or more first current limiting components are connected in series between two support members experiencing insulation failure, and due to the current-limiting function of the one or more first current limiting components, the short-circuit current is reduced, thereby lowering the possibility of high-voltage arcing and battery fire and explosion.

In some embodiments, the plurality of battery components are n battery components, and the plurality of support members are n support members;
an ith battery component is supported by an ith support member;
n-1 first current limiting components are provided, and the n-1 first current limiting components are connected in series between adjacent support members in a one-to-one correspondence;
where n is an integer greater than or equal to 2, and i is a positive integer less than or equal to n.

By adopting the above solution, the first current limiting component is provided between each pair of adjacent support members, such that in the case where insulation failure occurs in any two support members, one respective current limiting component is provided to limit the short-circuit current, thereby further lowering the possibility of high-voltage arcing and battery fire and explosion.

In some embodiments, the energy storage circuit further includes two second current limiting components.

A positive electrode of a first battery component is connected to the main positive line, and a negative electrode of an nth battery component is connected to the main negative line.

One second current limiting component is respectively connected in series between the first support member and the main positive line and between the nth support member and the main negative line; the second current limiting component is configured to limit a current between the first support member and the main positive line and a current between the nth support member and the main negative line.

By respectively connecting one second current limiting component in series between the first support member and the main positive line and between the nth support member and the main negative line, in the case where insulation failure occurs in the first support member and/or the nth support member, one respective current limiting component is provided to limit the short-circuit current, thereby further lowering the possibility of high-voltage arcing and battery fire and explosion.

In some embodiments, the energy storage circuit further includes a first electrical cabinet.

The main negative line and the first electrical cabinet are connected jointly to an electrical platform; or
the main positive line and the first electrical cabinet are connected jointly to an electrical platform; or
any one of the support members and the first electrical cabinet are connected jointly to the electrical platform.

By adopting the above solution, since the main negative line and the first electrical cabinet are connected jointly to the electrical platform, or the main positive line and the first electrical cabinet are connected jointly to the electrical platform, or any one of the support members and the first electrical cabinet are connected jointly to the electrical platform, the voltage balancing network including the plurality of first current limiting components and the two second current limiting components also serves as a voltage dividing resistor, thereby eliminating the need for a separate voltage dividing resistor, simplifying the hardware design, and saving the cost.

In some embodiments, an isolation switch component, a relay component, and a filter circuit are sequentially connected in series in the main positive line and the main negative line; the filter circuit is configured to filter a first direct current output from the battery module.

The second current limiting component is connected jointly to the isolation switch component; or
the second current limiting component is connected jointly to the isolation switch component and the relay component; or
the second current limiting component is connected jointly to the filter circuit.

The isolation switch component, the relay component, and the filter circuit are sequentially connected in series in the main positive line and the main negative line, such that the stability of the first direct current is improved, and the flexibility of the output of the first direct current is improved. The first support member is provided. The second current limiting components are connected to different positions in the main positive line and the main negative line, such that the flexibility of protection of the energy storage circuit is improved.

In some embodiments, a resistance value of each of the first current limiting components is a first preset resistance value;
a resistance value of each of the second current limiting components is less than or equal to the first preset resistance value.

By adopting the above solution, the voltage differences across adjacent support members are equal, such that in the case where insulation failure occurs in two support members, the stability of the current-limiting function of one or more first current limiting components is improved, and the possibility of high-voltage arcing and battery fire and explosion is further lowered.

In some embodiments, the resistance value of each of the second current limiting components is half of the first preset resistance value.

By adopting the above solution, the voltage differences across adjacent support members are equal, and both the voltage difference across the first support member and the main positive line and the voltage difference across the nth support member and the main negative line are half of the voltage differences across adjacent support members, thereby further improving the stability of the current-limiting function of the voltage balancing network and further lowering the possibility of high-voltage arcing and battery fire and explosion.

In some embodiments, when n is an even number, an (n/2)th support member and the first electrical cabinet are connected jointly to the electrical platform;
when n is an odd number, an ((n+1)/2)th support member and the first electrical cabinet are connected jointly to the electrical platform.

By adopting the above solution, the central support member and the first electrical cabinet are connected jointly to the electrical platform, such that in the case where the electrical platform is grounded, the maximum value of the absolute value of the voltage of the main positive line and the maximum value of the absolute value of the voltage of the main negative line are minimized, thereby further improving the safety and reliability of the energy storage circuit.

In some embodiments, the energy storage circuit further includes:
a plurality of first capacitive components connected in parallel with a plurality of first current limiting components in a one-to-one correspondence.

By adopting the above solution, in the case of lightning, surges, or the like, the first capacitive components suppress the voltage spikes across the corresponding first current limiting components, thereby reducing the possibility of breakdown of the first current limiting component and improving the reliability of the energy storage circuit. In addition, the voltage spikes across the main positive line and the main negative line are filtered out, thereby improving the stability of the energy storage circuit.

In some embodiments, the energy storage circuit further includes:
a plurality of second capacitive components connected in parallel with a plurality of second current limiting components in a one-to-one correspondence.

By adopting the above solution, in the case of lightning, surges, or the like, the second capacitive components suppress the voltage spikes across the corresponding second current limiting components, thereby reducing the possibility of breakdown of the second current limiting component and improving the reliability of the energy storage circuit. In addition, the voltage spikes across the main positive line and the main negative line are filtered out, thereby improving the stability of the energy storage circuit.

In some embodiments, a capacitance value of each of the first capacitive components is a first preset capacitance value;
a capacitance value of each of the second capacitive components is half of the first preset capacitance value.

By adopting the above solution, the capacitance values of the first capacitive components are equal, such that the voltage spike suppression capabilities across the support members are the same, thereby further improving the stability and reliability of the energy storage circuit.

In some embodiments, the energy storage circuit further comprises a second electrical cabinet and two voltage dividing components.

The two voltage dividing components are connected in series between the main positive line and the main negative line.

The two voltage dividing components and the second electrical cabinet are connected jointly to an electrical platform.

By adopting the above solution, the two voltage dividing components and the second electrical cabinet are provided, and the common connection point of the two voltage dividing components and the second electrical cabinet is clamped to the potential of the electrical platform, such that the safety of the energy storage circuit is improved. In addition, the maximum value of the absolute value of the main positive line voltage and the maximum value of the absolute value of the main negative line voltage are configured to be minimized, thereby further improving the safety and reliability of the energy storage circuit.

In some embodiments, a plurality of third capacitive components are further included.

The first current limiting components are connected in parallel with the third capacitive components.

By adopting the above solution, by adopting the above solution, in the case of lightning, surges, or the like, the third capacitive components suppress the voltage spikes across the corresponding first current limiting components, thereby reducing the possibility of breakdown of the first current limiting component and improving the reliability of the energy storage circuit.

In some embodiments, the energy storage circuit further includes:
a conversion circuit, connected to the main positive line and the main negative line, and configured to convert the first direct current output from the battery module to output an alternating current.

By adopting the above solution, direct current-to-alternating current conversion is performed on the first direct current, thereby providing alternating current output of the energy storage module.

In a second aspect, an embodiment of the present utility model further provides a power supply apparatus. The power supply apparatus includes a load and the energy storage circuit described above.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the present application. Furthermore, the same reference numerals in all the drawings denote identical components. In the drawings:
FIG. 1 is a schematic structural diagram of an energy storage circuit according to an embodiment of the present application;
FIG. 2 is another schematic structural diagram of an energy storage circuit according to an embodiment of the present application;
FIG. 3 is another schematic structural diagram of an energy storage circuit according to an embodiment of the present application;
FIG. 4 is another schematic structural diagram of an energy storage circuit according to an embodiment of the present application;
FIG. 5 is an exemplary schematic diagram of a portion of an energy storage circuit according to an embodiment of the present application;
FIG. 6 is another schematic structural diagram of an energy storage circuit according to an embodiment of the present application;
FIG. 7 is another schematic structural diagram of an energy storage circuit according to an embodiment of the present application;
FIG. 8 is another schematic structural diagram of an energy storage circuit according to an embodiment of the present application;
FIG. 9 is another schematic structural diagram of an energy storage circuit according to an embodiment of the present application;
FIG. 10 is another schematic structural diagram of an energy storage circuit according to an embodiment of the present application;
FIG. 11 is an exemplary schematic diagram of a portion of an energy storage circuit according to an embodiment of the present application.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, the technical terms such as "first" and "second" are only used to distinguish different objects and should not be interpreted as indicating or implying the relative importance or implicitly indicating the number, specific order, or priority of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

At present, judging from the trends of the market situation, the application of energy storage power systems is becoming increasingly widespread. Energy storage power systems are widely applied in the field of power transmission and distribution networks. With the continuous expansion of the application field of energy storage power systems, the market demand for energy storage power systems is also constantly increasing.

With the wide application of energy storage power systems and power transmission and distribution networks, addressing the power supply for devices has become a social issue at present. Energy storage circuits have attracted attention due to their safety and reliability in discharging. A related energy storage circuit includes a main positive line, a main negative line, and a battery module connected between the main positive line and the main negative line, where a plurality of battery packs sequentially connected in series are provided in the battery module. Each battery pack includes a first metal shell, a second metal shell disposed in the first metal shell, and a battery cell set disposed in the second metal shell; the first metal shell is insulated from the second metal shell. A protective resistor is connected between the first metal shell and the second metal shell in each battery pack, and the first metal shell in each battery pack is grounded, thereby suppressing a short-circuit current. However, the energy storage circuit can only suppress the short-circuit current when insulation failure occurs in a single battery enclosure, but cannot reduce the short-circuit current in the case of a two-point insulation failure across battery enclosures (support members), resulting in poor safety and reliability.

To address the problem that the short-circuit current cannot be reduced in the case of a two-point insulation failure across battery enclosures (support members), the applicant has found through research that a first current limiting component may be connected in series between adjacent support components to limit the current between two battery enclosures that experience insulation failure via the first current limiting component, thereby improving the safety and reliability of the energy storage circuit.

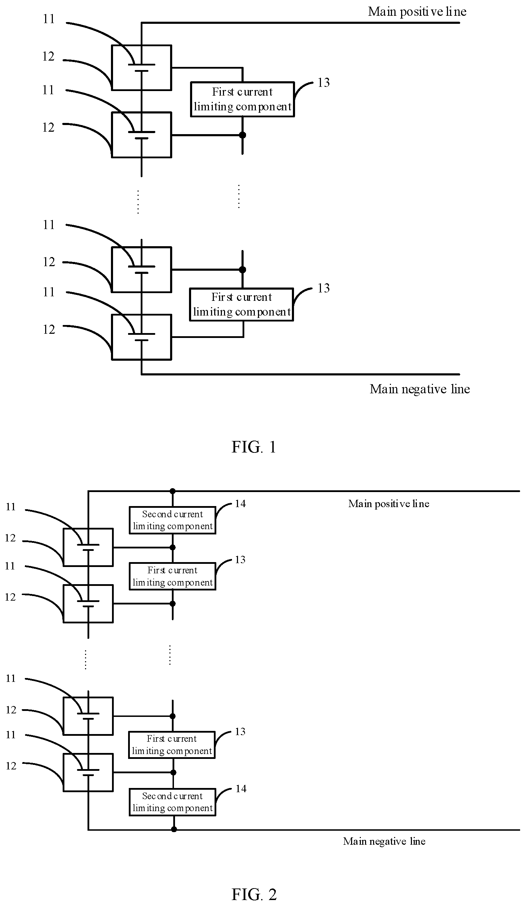

According to some embodiments of the present application, referring to FIG. 1, FIG. 1 shows a schematic structural diagram of an energy storage circuit according to an embodiment of the present application. For ease of description, only the parts related to this embodiment are shown, and the details are provided below:

The energy storage circuit includes a main positive line, a main negative line, at least one first current limiting component 13, and a battery module connected between the main positive line and the main negative line. The battery module includes a plurality of battery components 11 sequentially connected in series, and the plurality of battery components 11 are respectively supported by a plurality of support members 12 in a one-to-one correspondence.

The battery components 11 are insulated from the support members 12.

A first current limiting component 13 is connected between two adjacent support members 12, and the first current limiting component 13 is configured to limit a current between two adjacent support members 12.

It can be understood that the battery component 11 includes one or more cells connected in parallel and/or in series. The support member 12 includes a shell (also referred to as a battery enclosure) or a cold plate, and both the shell and the cold plate may be made of a metallic material. It should be noted that the cold plate is a battery cold plate. The battery cold plate refers to a thin sheet located below the battery component 11, and its main function is to conduct heat from within the battery to maintain a stable temperature of the battery, thereby improving the operating efficiency of the battery. The first current limiting component 13 may include a first resistor component. In specific implementations, the resistance of the first current limiting component 13 may range from kΩ to MΩ. When two support members 12 are provided, one first current limiting component 13 is provided; when three or more support members 12 are provided, a plurality of first current limiting components 13 may also be provided, with the first current limiting component 13 disposed between each pair of adjacent support members 12. It should be noted that FIG. 1 only shows a case in which a plurality of first current limiting components 13 are provided.

In the technical solutions of the embodiments of the present application, the battery components 11 are insulated from the support members 12, and the first current limiting component 13 is connected in series between two adjacent support members 12. As a result, in the case of a two-point insulation failure across battery enclosures (support members 12), that is, in the case where insulation failure occurs in each support member 12, one or more first current limiting components 13 are connected in series between two support members 12 experiencing insulation failure, and due to the current-limiting function of the one or more first current limiting components 13, the short-circuit current is reduced, thereby lowering the possibility of high-voltage arcing and battery fire and explosion.

According to some embodiments of the present application, optionally, with continued reference to FIG. 1, the plurality of battery components 11 are n battery components 11, and the plurality of support members 12 are n support members 12.

The ith battery component 11 is supported by the ith support member 12.
n-1 first current limiting components 13 are provided, and the n-1 first current limiting components 13 are connected in series between adjacent support members 12 in a one-to-one correspondence,
where n is an integer greater than or equal to 2, and i is a positive integer less than or equal to n.

It can be understood that one first current limiting component 13 is provided between each pair of adjacent support members 12. Therefore, in the case where insulation failure occurs in any two support members 12, one or more current limiting components limit the short-circuit current.

By adopting the above solution, in the case where insulation failure occurs in any two support members 12, one or more respective current limiting components are provided to limit the short-circuit current, thereby further lowering the possibility of high-voltage arcing and battery fire and explosion.

According to some embodiments of the present application, optionally, with continued reference to FIG. 2, FIG. 2 shows a schematic structural diagram of an energy storage circuit according to another embodiment of the present application. For ease of description, only the parts related to this embodiment are shown, and the details are provided below:

In addition to all components and components of the energy storage circuit shown in FIG. 1, the energy storage circuit further includes two second current limiting components 14.

A positive electrode of a first battery component 11 is connected to the main positive line, and a negative electrode of an nth battery component 11 is connected to the main negative line.

One second current limiting component 14 is respectively connected in series between the first support member 12 and the main positive line and between the nth support member 12 and the main negative line. The second current limiting component 14 is configured to limit a current between the first support member 12 and the main positive line and a current between the nth support member 12 and the main negative line.

It should be noted that the second current limiting component 14 may include a second resistor component.

The plurality of first current limiting components 13 and the two second current limiting components 14 form a voltage balancing network to balance the voltages across adjacent support members 12.

By respectively connecting one second current limiting component 14 in series between the first support member and the main positive line and between the nth support member 12 and the main negative line, in the case where insulation failure occurs in the first support member 12 and/or the nth support member 12, one respective current limiting component is provided to limit the short-circuit current, thereby further lowering the possibility of high-voltage arcing and battery fire and explosion.

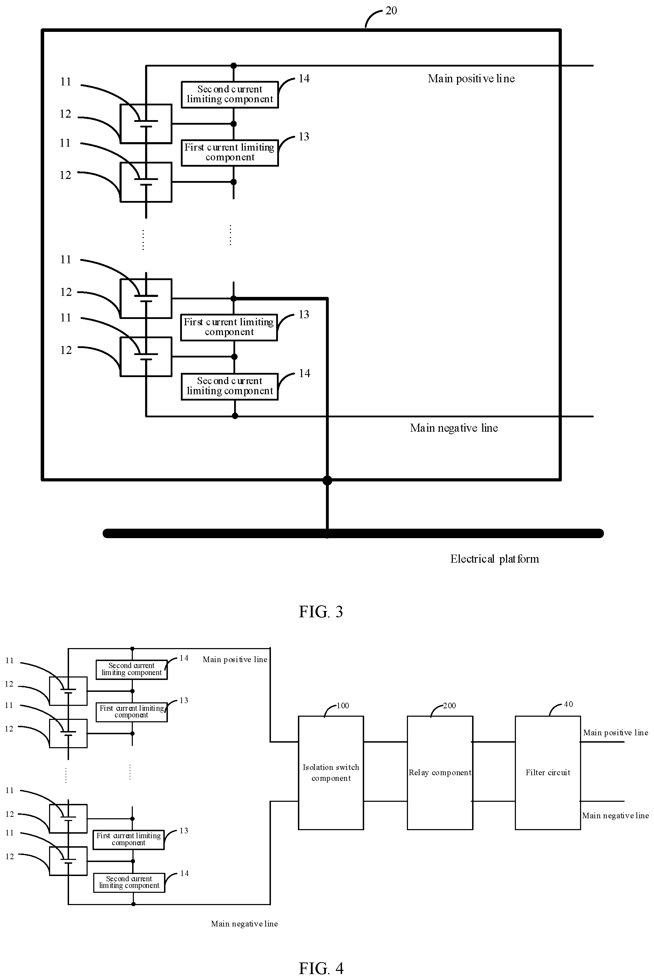

According to some embodiments of the present application, optionally, with continued reference to FIG. 3, FIG. 3 shows a schematic structural diagram of an energy storage circuit according to another embodiment of the present application. For ease of description, only the parts related to this embodiment are shown, and the details are provided below:

In addition to all components and components of the energy storage circuit shown in FIG. 2, the energy storage circuit further includes a first electrical cabinet 20.

The main negative line and the first electrical cabinet 20 are connected jointly to an electrical platform; or
the main positive line and the first electrical cabinet 20 are connected jointly to an electrical platform; or
any one of the support members 12 and the first electrical cabinet 20 are connected jointly to an electrical platform.

It should be noted that the electrical platform may be an equipotential object. In some embodiments, the electrical platform may be a power ground or connected to a power ground.

Any node of the voltage balancing network may be connected to the electrical platform, and the voltage of the main negative line and the voltage of the main positive line vary with the node connected to the electrical platform, so as to adapt to various application scenarios, thereby expanding the functions of the product.

By adopting the above solution, since the main negative line and the first electrical cabinet 20 are connected jointly to the electrical platform, or the main positive line and the first electrical cabinet 20 are connected jointly to the electrical platform, or any one of the support members 12 and the first electrical cabinet 20 are connected jointly to the electrical platform, the voltage balancing network including the plurality of first current limiting components 13 and the two second current limiting components 14 also serves as a voltage dividing resistor, thereby eliminating the need for a separate voltage dividing resistor, simplifying the hardware design, and saving the cost.

According to some embodiments of the present application, optionally, with continued reference to FIG. 4, FIG. 4 shows a schematic structural diagram of an energy storage circuit according to another embodiment of the present application. For ease of description, only the parts related to this embodiment are shown, and the details are provided below:

In the above energy storage circuit, in addition to all components and components of the energy storage circuit shown in FIG. 3, an isolation switch component 100, a relay component 200, and a filter circuit 40 are sequentially connected in series in the main positive line and the main negative line, and the filter circuit 40 is configured to filter a first direct current output from the battery module.

The second current limiting component 14 is only connected jointly to the isolation switch component 100; or
the second current limiting component 14 is connected jointly to the isolation switch component 100 and the relay component 200; or
the second current limiting component 14 is connected jointly to the filter circuit 40.

In the case where the second current limiting component 14 is only connected jointly to the isolation switch component 100, the convenience of wiring is improved, different protection methods are not required for various operating conditions, and the voltage balancing network is in a non-floating state, such that the protection method is simple.

In the case where the second current limiting component 14 is connected jointly to the isolation switch component 100 and the relay component 200, the voltage of the voltage balancing network can be interrupted by opening the isolation switch component 100, thereby improving the safety, but the voltage balancing network is in a floating state.

In the case where the second current limiting component 14 is connected jointly to the filter circuit 40, the voltage balancing network is connected to an alternating current side of the energy storage circuit, and the voltage balancing network is in a non-floating state.

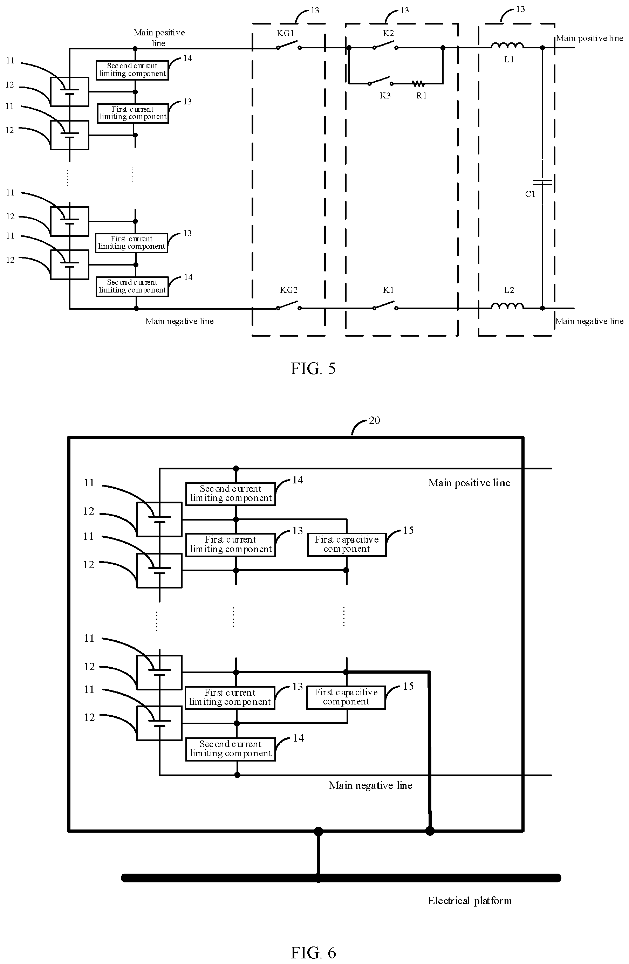

In specific implementations, as shown in FIG. 5, the isolation switch component 100 includes a first isolation switch KG1 and a second isolation switch KG2; the first isolation switch KG1 is connected in series in the main positive line, and the second isolation switch KG2 is connected in series in the main negative line.

The relay component 200 includes a precharge component connected in series in the main positive line and a first relay K1 connected in series in the main negative line. The precharge component includes a second relay K2, a third relay K3, and a first resistor R1. The third relay K3 and the first resistor R1 are connected in series and then connected in parallel with the second relay K2.

The filter circuit 40 includes a first inductor L1, a second inductor L2, and a first capacitor C1. The first inductor L1 is connected in series in the main positive line, the second inductor L2 is connected in series in the main negative line, and the first capacitor C1 is connected between the main positive line and the main negative line.

The isolation switch component, the relay component, and the filter circuit are sequentially connected in series in the main positive line and the main negative line, such that the stability of the first direct current is improved, and the flexibility of the output of the first direct current is improved. The first support member is provided. The second current limiting components are connected to different positions in the main positive line and the main negative line, such that the flexibility of protection of the energy storage circuit is improved.

In some embodiments, the resistance value of each first current limiting component 13 is a first preset resistance value, and the resistance value of each second current limiting component 14 is less than or equal to the first preset resistance value.

By adopting the above solution, the voltage differences across adjacent support members 12 are equal, such that in the case where insulation failure occurs in two support members 12, the stability of the current-limiting function of the one or more first current limiting components 13 is improved, and the possibility of high-voltage arcing and battery fire and explosion is further lowered.

In some embodiments, the resistance value of each second current limiting component 14 is half of the first preset resistance value.

It can be understood that the voltage differences across adjacent support members 12 are Vbus/n; the voltage difference across the first support member 12 and the main positive line is Vbus/2n; the voltage difference across the nth support member 12 and the main negative line is Vbus/2n, where Vbus/ denotes the voltage difference across the main negative line and the main positive line. Therefore, the first current limiting component 13 and the second current limiting component 14 achieve the balance of the voltage differences across adjacent support members 12.

By adopting the above solution, the voltage differences across adjacent support members 12 are equal, and both the voltage difference across the first support member 12 and the main positive line and the voltage difference across the nth support member 12 and the main negative line are half of the voltage differences across adjacent support members 12, thereby further improving the stability of the current-limiting function of the voltage balancing network and further lowering the possibility of high-voltage arcing and battery fire and explosion.

In some embodiments, when n is an even number, an (n/2)th support member 12 and the first electrical cabinet 20 are connected jointly to the electrical platform.

When n is an odd number, an ((n+1)/2 )th support member 12 and the first electrical cabinet 20 are connected jointly to the electrical platform.

It can be understood that when n is an odd number, the voltage across the electrical platform and the main positive line is a first voltage, the voltage across the electrical platform and the main negative line is a second voltage, and the first voltage and the second voltage are equal. When the electrical platform is grounded, the absolute value of the voltage of the main positive line and the absolute value of the voltage of the main negative line are minimized. When n is an odd number, the voltage across the electrical platform and the main positive line is a first voltage, the voltage across the electrical platform and the main negative line is a second voltage, and the first voltage and the second voltage are most approximate. Similarly, when the electrical platform is grounded, the maximum value of the absolute value of the voltage of the main positive line and the maximum value of the absolute value of the voltage of the main negative line are minimized.

By adopting the above solution, the central support member 12 and the first electrical cabinet 20 are connected jointly to the electrical platform, such that in the case where the electrical platform is grounded, the maximum value of the absolute value of the voltage of the main positive line and the maximum value of the absolute value of the voltage of the main negative line are minimized, thereby further improving the safety and reliability of the energy storage circuit.

According to some embodiments of the present application, optionally, with continued reference to FIG. 6, FIG. 6 shows a schematic structural diagram of an energy storage circuit according to another embodiment of the present application. For ease of description, only the parts related to this embodiment are shown, and the details are provided below:

In addition to all components and components of the energy storage circuit shown in FIG. 4, the energy storage circuit further includes a plurality of first capacitive components 15.

The plurality of first capacitive components 15 are connected in parallel with a plurality of first current limiting components 13 in a one-to-one correspondence.

In the case of lightning, surges, or the like, current spikes occur in each first current limiting component 13, and each first capacitive component 15 suppresses voltage spikes across the corresponding first current limiting component 13.

By adopting the above solution, in the case of lightning, surges, or the like, the first capacitive components suppress the voltage spikes across the corresponding current limiting components, thereby reducing the possibility of breakdown of the first current limiting component 13 and improving the reliability of the energy storage circuit. In addition, the voltage spikes across the main positive line and the main negative line are filtered out, thereby improving the stability of the energy storage circuit.

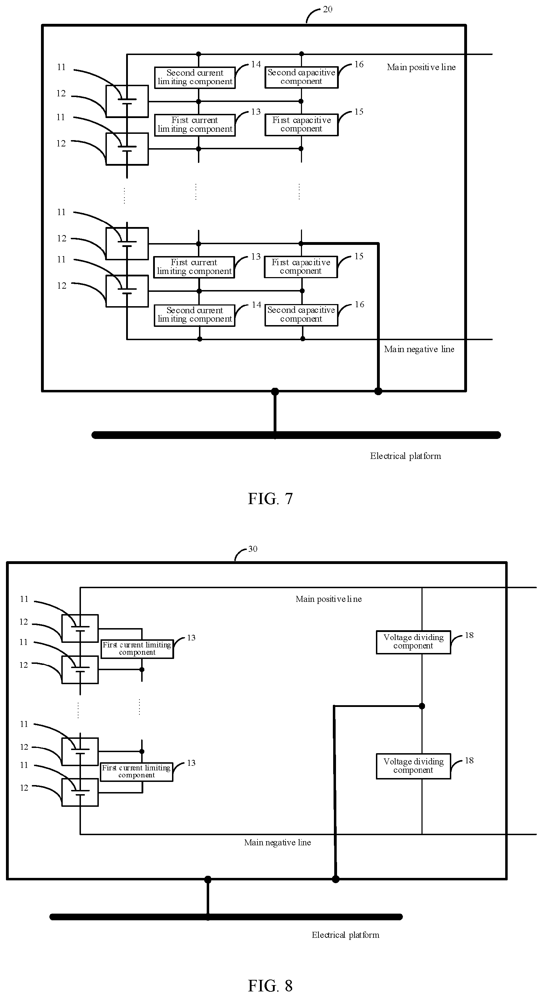

According to some embodiments of the present application, optionally, with continued reference to FIG. 7, FIG. 7 shows a schematic structural diagram of an energy storage circuit according to another embodiment of the present application. For ease of description, only the parts related to this embodiment are shown, and the details are provided below:

In addition to all components and components of the energy storage circuit shown in FIG. 6, the energy storage circuit further includes a plurality of second capacitive components 16.

The plurality of first capacitive components 15 and the plurality of first current limiting components 13 are connected in parallel in a one-to-one correspondence, and the plurality of second capacitive components 16 and a plurality of second current limiting components 14 are connected in parallel in a one-to-one correspondence.

In the case of lightning, surges, or the like, current spikes occur in each second current limiting component 14, and each second capacitive component 16 suppresses voltage spikes across the corresponding second current limiting component 14.

By adopting the above solution, in the case of lightning, surges, or the like, the second capacitive components suppress the voltage spikes across the corresponding second current limiting components, thereby reducing the possibility of breakdown of the second current limiting component 14 and improving the reliability of the energy storage circuit. In addition, the voltage spikes across the main positive line and the main negative line are filtered out, thereby improving the stability of the energy storage circuit.

In some embodiments, the capacitance value of each first capacitive component 15 is a first preset capacitance value, and the capacitance value of each second capacitive component 16 is half of the first preset capacitance value.

The ratios of the capacitance values of the respective capacitive components to the resistance values of the corresponding current limiting components are the same. Therefore, the voltage spike suppression capabilities across the support members 12 are the same.

By adopting the above solution, the capacitance values of the first capacitive components 15 are equal, such that the voltage spike suppression capabilities across the support members 12 are the same, thereby further improving the stability and reliability of the energy storage circuit.

According to some embodiments of the present application, optionally, with continued reference to FIG. 8, FIG. 8 shows a schematic structural diagram of an energy storage circuit according to another embodiment of the present application. For ease of description, only the parts related to this embodiment are shown, and the details are provided below:

In addition to all components and components of the energy storage circuit shown in FIG. 1, the energy storage circuit further includes a second electrical cabinet 30 and two voltage dividing components 18.

The two voltage dividing components 18 are connected in series between the main positive line and the main negative line.

The two voltage dividing components 18 and the second electrical cabinet 30 are connected jointly to the electrical platform.

It can be understood that the resistance values of the two voltage dividing components 18 are the same. By connecting the two voltage dividing components 18 and the second electrical cabinet 30 jointly to the electrical platform, the voltage across the electrical platform and the main positive line is a first voltage, the voltage across the electrical platform and the main negative line is a second voltage, and the first voltage and the second voltage are equal. When the electrical platform is grounded, the absolute value of the potential of the main positive line and the absolute value of the potential of the main negative line are minimized.

By adopting the above solution, the two voltage dividing components 18 and the second electrical cabinet 30 are provided, and the common connection point of the two voltage dividing components 18 and the second electrical cabinet 30 is clamped to the potential of the electrical platform, such that the safety of the energy storage circuit is improved. In addition, the maximum value of the absolute value of the main positive line voltage and the maximum value of the absolute value of the main negative line voltage are configured to be minimized, thereby further improving the safety and reliability of the energy storage circuit.

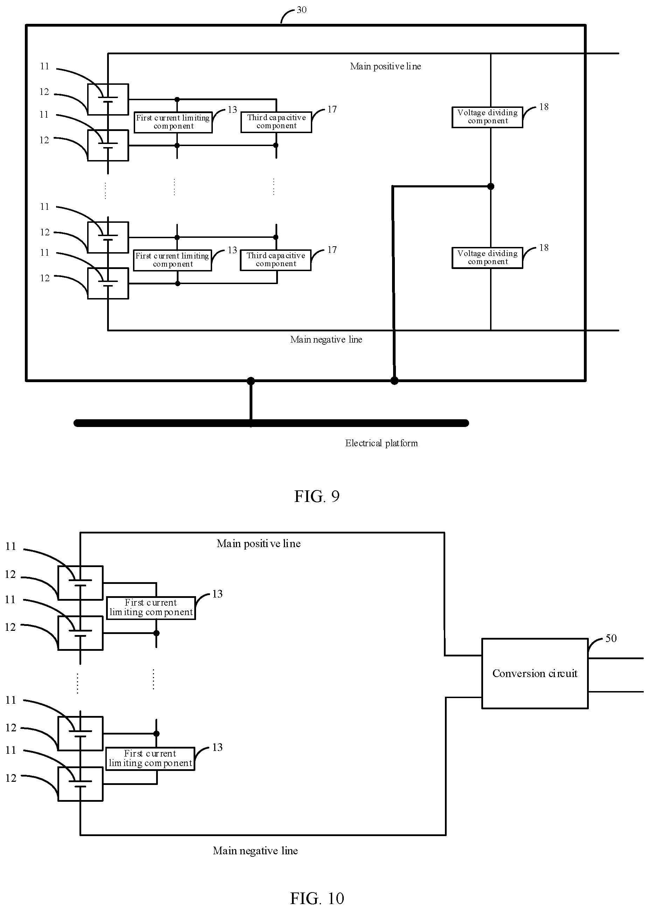

According to some embodiments of the present application, optionally, with continued reference to FIG. 9, FIG. 9 shows a schematic structural diagram of an energy storage circuit according to another embodiment of the present application. For ease of description, only the parts related to this embodiment are shown, and the details are provided below:

In addition to all components and components of the energy storage circuit shown in FIG. 8, the energy storage circuit further includes a plurality of third capacitive components 17.

The first current limiting components 13 are connected in parallel with the third capacitive components 17.

In specific implementations, the resistance values of the first current limiting components 13 are the same, and the capacitance values of the third capacitive components 17 are the same, such that the voltage differences across adjacent support members 12 are the same, and the voltage spike suppression capabilities across the support members 12 are the same.

By adopting the above solution, by adopting the above solution, in the case of lightning, surges, or the like, the third capacitive components 17 suppress the voltage spikes across the corresponding first current limiting components 13, thereby reducing the possibility of breakdown of the first current limiting component 13 and improving the reliability of the energy storage circuit.

According to some embodiments of the present application, optionally, with continued reference to FIG. 10, FIG. 10 shows a schematic structural diagram of an energy storage circuit according to another embodiment of the present application. For ease of description, only the parts related to this embodiment are shown, and the details are provided below:

In addition to all components and components of the energy storage circuit shown in FIG. 1, the energy storage circuit further includes a conversion circuit 50.

The conversion circuit 50 is connected to the main positive line and the main negative line and configured to convert the first direct current output from the battery module to output an alternating current.

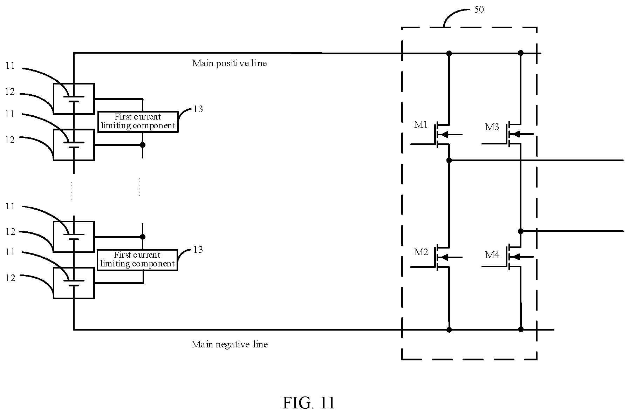

As an example but not limitation, as shown in FIG. 11, the conversion circuit 50 includes a first insulated gate bipolar transistor (IGBT) M1, a second IGBT M2, a third IGBT M3, and a fourth IGBT M4. The collector of the first IGBT M1, the collector of the third IGBT M3, the emitter of the second IGBT M2, and the emitter of the fourth IGBT M4 jointly form a first direct current input terminal of the conversion circuit 50, which is connected to the main positive line and the main negative line to receive the first direct current. The emitter of the first IGBT M1, the emitter of the third IGBT M3, the collector of the second IGBT M2, and the collector of the fourth IGBT M4 jointly form an alternating current output terminal of the conversion circuit 50 to output the alternating current.

By adopting the above solution, direct current-to-alternating current conversion is performed on the first direct current, thereby providing alternating current output of the energy storage module.

According to some embodiments of the present application, the present application further provides a power supply apparatus. The power supply apparatus includes the energy storage circuit according to any one of the above solutions.

In specific implementations, the power supply apparatus may include an energy storage station, and the energy storage circuit stores electric energy for the energy storage station and releases the electric energy when the power grid is short of energy.

Since the power supply apparatus includes the energy storage circuit according to any one of the above solutions, the short-circuit current can be reduced, thereby lowering the possibility of high-voltage arcing and battery fire and explosion.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. An energy storage circuit, comprising a main positive line, a main negative line, at least one first current limiting component, and a battery module connected between the main positive line and the main negative line, wherein the battery module comprises a plurality of battery components sequentially connected in series, and the plurality of battery components are respectively supported by a plurality of support members in a one-to-one correspondence;
the battery components are insulated from the support members;
the first current limiting component is connected between two adjacent support members, and the first current limiting component is configured to limit a current between the two adjacent support members.

2. The energy storage circuit according to claim 1, wherein the plurality of battery components are n battery components, and the plurality of support members are n support members;
an ith battery component is supported by an ith support member;
n-1 first current limiting components are provided, and the n-1 first current limiting components are connected in series between adjacent support members in a one-to-one correspondence;
wherein n is an integer greater than or equal to 2, and i is a positive integer less than or equal to n.

3. The energy storage circuit according to claim 2, wherein the energy storage circuit further comprises two second current limiting components;
a positive electrode of a first battery component is connected to the main positive line, and a negative electrode of an nth battery component is connected to the main negative line;
one second current limiting component is respectively connected in series between the first support member and the main positive line and between the nth support member and the main negative line; the second current limiting component is configured to limit a current between the first support member and the main positive line and a current between the nth support member and the main negative line.

4. The energy storage circuit according to claim 3, wherein the energy storage circuit further comprises a first electrical cabinet;
the main negative line and the first electrical cabinet are connected jointly to an electrical platform; or
the main positive line and the first electrical cabinet are connected jointly to an electrical platform; or
any one of the support members and the first electrical cabinet are connected jointly to the electrical platform.

5. The energy storage circuit according to claim 3, wherein an isolation switch component, a relay component, and a filter circuit are sequentially connected in series in the main positive line and the main negative line; the filter circuit is configured to filter a first direct current output from the battery module;
the second current limiting component is connected jointly to the isolation switch component; or
the second current limiting component is connected jointly to the isolation switch component and the relay component; or
the second current limiting component is connected jointly to the filter circuit.

6. The energy storage circuit according to claim 3, wherein a resistance value of each of the first current limiting components is a first preset resistance value;
a resistance value of each of the second current limiting components is less than or equal to the first preset resistance value.

7. The energy storage circuit according to claim 6, wherein
the resistance value of each of the second current limiting components is half of the first preset resistance value.

8. The energy storage circuit according to claim 4, wherein when n is an even number, an (n/2)th support member and the first electrical cabinet are connected jointly to the electrical platform;
when n is an odd number, an ((n+1)/2)th support member and the first electrical cabinet are connected jointly to the electrical platform.

9. The energy storage circuit according to claim 4, wherein the energy storage circuit further comprises:
a plurality of first capacitive components connected in parallel with a plurality of first current limiting components in a one-to-one correspondence.

10. The energy storage circuit according to claim 9, wherein the energy storage circuit further comprises:
a plurality of second capacitive components connected in parallel with a plurality of second current limiting components in a one-to-one correspondence.

11. The energy storage circuit according to claim 10, wherein a capacitance value of each of the first capacitive components is a first preset capacitance value;
a capacitance value of each of the second capacitive components is half of the first preset capacitance value.

12. The energy storage circuit according to claim 1, wherein the energy storage circuit further comprises a second electrical cabinet and two voltage dividing components;
the two voltage dividing components are connected in series between the main positive line and the main negative line;
the two voltage dividing components and the second electrical cabinet are connected jointly to an electrical platform.

13. The energy storage circuit according to claim 12, further comprising a plurality of third capacitive components,
the first current limiting components being connected in parallel with the third capacitive components.

14. The energy storage circuit according to any one of claims 1 to 13, further comprising:
a conversion circuit, connected to the main positive line and the main negative line, and configured to convert the first direct current output from the battery module to output an alternating current.

15. A power supply apparatus, wherein the power supply apparatus comprises the energy storage circuit according to any one of claims 1 to 14.
